# EUROPÄISCHE PATENTANMELDUNG

(11) **EP 2 908 386 A1**
(43) Veröffentlichungstag der Anmeldung: **19.08.2015**
(21) Anmeldenummer: 14155558.1
(22) Anmeldetag: 18.02.2014
(51) Int. Cl.: H01R 13/52, B60L 11/18, H01R 13/60, H01R 13/629

(54) **Aufnahmevorrichtung für eine Aufnahme eines Steckers**

(71) Anmelder: Multi-Holding AG, 4123 Allschwil (CH)
(72) Erfinder: Hell, Aurélien, 68118 Ligsdorf (FR)
(74) Vertreter: Frischknecht, Harry Ralph

(57) **Zusammenfassung**

Eine Aufnahmevorrichtung (1) für eine Aufnahme eines Steckers umfasst ein Gehäuse (3) mit einem Aufnahmeraum (4), der über eine Stecköffnung (5) zugänglich ist und der Aufnahme von Teilen des Steckers dient, einen die Stecköffnung (5) verschliessenden Deckel (6), welcher um eine Deckelschwenkachse von einer Verschlusslage in eine Freigabelage verschwenkbar ist, und einen am Gehäuse angelenkten um eine Hebelschwenkachse verschwenkbaren Betätigungshebel (7) mit Führungsbahnen (12), in welche Teile des Deckels (6) eingreifen und über welche der Deckel (6) bei einer Verschwenkung des Betätigungshebels (7) verschwenkbar ist, wobei der Betätigungshebel (7) von einer Ausgangslage, in welcher der Deckel (6) in der Verschlusslage ist, in eine Endlage, in welcher der Deckel in Freigabelage ist, verschwenkbar ist. Die Schwenkbewegung des Betätigungshebels (7) und die Schwenkbewegung des Deckels (6) sind bezüglich ihrer jeweiligen Verschwenkrichtung entgegengesetzt zueinander.

## Beschreibung

### TECHNISCHES GEBIET

Die vorliegende Erfindung betrifft eine Aufnahmevorrichtung für eine Aufnahme eines Steckers, insbesondere eine Parkstation eines Steckers oder eine elektrischen Steckeraufnahme, nach dem Oberbegriff von Anspruch 1 sowie eine Anordnung mit einem Stecker und einer Aufnahmevorrichtung nach dem Oberbegriff von Anspruch 16.

### STAND DER TECHNIK

Aus der FR 2,733,635 ist ein elektrischer Steckverbinder bekannt geworden, welcher einen Deckel aufweist, mit welchen die Steckeraufnahme verschliessbar ist. Der Deckel ist mit einem Betätigungshebel um eine Schwenkachse zur Steckeraufnahme verschwenkbar. Der Betätigungshebel weist Steuerkurven auf, in welche ein am Deckel angelenkter Zapfen eingreift. Weiter arbeitet ein Teil der Steuerkurven mit am Steckerelement angeformten Zapfen zusammen. Über diese Zapfen kann das Steckerelement zur Steckeraufnahme mechanisch gesichert werden.

Nachteilig an der technischen Lehre der FR 2,733,635 ist die Tatsache, dass die Vorrichtung anfällig bezüglich Verschmutzungen ist, was die Gebrauchstauglichkeit der Vorrichtung stark benachteiligt.

Ein weiterer Nachteil ergeht aus der Tatsache, dass die Aufnahme nach der FR 2,733,635 grosse Bewegungswege erfordert. So muss der Hebel beim Öffnen des Deckels um 180° verschwenkt werden, was gerade bei kleinräumigen Anwendung nachteilig ist.

### DARSTELLUNG DER ERFINDUNG

Ausgehend von diesem Stand der Technik liegt der Erfindung eine Aufgabe zugrunde, eine Aufnahmevorrichtung anzugeben, welche die Nachteile des Standes der Technik überwindet. Insbesondere soll die Aufnahmevorrichtung möglichst kompakt ausgebildet sein, so dass diese auch auf engem Raum einsetzbar ist.

Diese Aufgabe löst der Gegenstand nach Anspruch 1. Demgemäss umfasst eine Aufnahmevorrichtung für eine Aufnahme eines Steckers ein Gehäuse mit einem Aufnahmeraum, der über eine Stecköffnung zugänglich ist und der Aufnahme von Teilen des Steckers dient, einen die Stecköffnung verschliessenden Deckel, welcher um eine Deckelschwenkachse von einer Verschlusslage in eine Freigabelage verschwenkbar ist, und einen am Gehäuse angelenkten um eine Hebelschwenkachse verschwenkbaren Betätigungshebel mit Führungsbahnen, in welche Teile des Deckels eingreifen und über welche der Deckel bei einer Verschwenkung des Betätigungshebels verschwenkbar ist. In der Verschlusslage verschliesst der Deckel die Stecköffnung und in der Freigabelage gibt der Deckel die Stecköffnung frei, so dass in diese der Stecker eingeschoben werden kann. Der Betätigungshebel ist von einer Ausgangslage, in welcher der Deckel in der Verschlusslage ist, in eine Endlage, in welcher der Deckel in Freigabelage ist, verschwenkbar. Durch die Verschwenkung von der Ausgangslage in die Endlage wird der Deckel aufgrund des Zusammenarbeitens mit den Führungsbahnen von der Verschlusslage in die Freigabelage verschwenkt. Die Schwenkbewegung des Betätigungshebels und die Schwenkbewegung des Deckels sind bezüglich ihrer jeweiligen Verschwenkrichtung entgegengesetzt zueinander.

Der Deckel wird beispielsweise im Uhrzeigersinn verschwenkt während der Betätigungshebel in die andere Richtung, also im Gegenuhrzeigersinn, verschwenkt wird.

Die entgegengesetzte Schwenkbewegung zwischen dem Betätigungshebel und dem Deckel hat den Vorteil, dass die Aufnahmevorrichtung an Stellen mit engen Platzverhältnissen einsetzbar ist, weil die Bewegungswege von Betätigungshebel und Deckel kompakter sind. Ein weiterer Vorteil ergeht aus der Tatsache, dass die Verschwenkwege kürzer gewählt werden können.

Besonders bevorzugt ist der Deckel bezüglich der Stecköffnung gesehen auf einer Seite der Stecköffnung am Gehäuse angelenkt, während der Betätigungshebel gegenüber der besagten Seite am Gehäuse angelenkt ist. Der Betätigungshebel liegt also bezüglich der Stecköffnung vorzugsweise gegenüber des Deckels.

Vorzugsweise steht der Betätigungshebel über mindestens einen Hebelarm, welcher um die Hebelschwenkachse verschwenkbar ist, mit dem Gehäuse in Verbindung. Besonders bevorzugt sind mindestens zwei oder genau zwei Hebelarme vorhanden. Weiter umfasst der Betätigungshebel einen mit dem einen bzw. mit den mindestens zwei Hebelarmen in Verbindung stehenden Griff, welcher winklig zum besagten Hebelarm zum Gehäuse hin orientiert ist. Über diesen Griff kann der Benutzer den Betätigungshebel ergreifen und betätigen.

Besonders bevorzugt ist der Griff derart angeordnet, dass dieser bei der Bewegung des Betätigungshebels die Mittelachse der Stecköffnung nicht schneidet oder ein sich um die Mittelachse mit der Ausdehnung der Stecköffnung erstreckender Hüllzylinder nicht schneidet, sondern im Wesentlichen von dieser/diesem weg bewegt wird. Dies insbesondere dann, wenn der Stecker im Gehäuse angeordnet ist. Als Hüllzylinder wird in diesem Zusammenhang ein virtueller Zylinder verstanden, welcher durch die Innenwände der Stecköffnung definiert wird. Durch die Anordnung des Hebels kann es nicht zu einer Kollision der Bewegung mit einem in der Stecköffnung liegenden Stecker kommen.

In einer Ebene rechtwinklig zur Hebelschwenkachse und/oder zur Deckelschwenkachse gesehen, schneiden sich die Bewegungskurven in dieser Ebene der Schwenkbewegung des Deckels und der Schwenkbewegung des Betätigungshebels. Die Ebene kann dabei als Projektionsebene bezeichnet werden.

Besonders bevorzugt liegt die Hebelschwenkachse beabstandet und parallel zur Deckelschwenkachse, wobei vorzugsweise die Hebelschwenkachse bezüglich des Aufnahmeraums gegenüber der Deckelschwenkachse liegt. Vorzugsweise sind die Schwenkachse an der Aussenseite des Gehäuses angeordnet und liegen bezüglich der Stecköffnung gegenüber voneinander.

Vorzugsweise schliesst die Schwenkbewegung des Betätigungshebels von der Ausgangslage, in welcher der Deckel in Verschlusslage ist, bis in seine Endlage, in welcher der Deckel in Freigabelage ist, einen Winkel von 90° bis 130°, insbesondere von 95° bis 120° ein. Der Deckel wird um einen ähnlichen Winkel verschwenkt.

Vorzugsweise entspricht die Schwenkbewegung des Deckels bezüglich des Schwenkwinkels der Schwenkbewegung des Betätigungshebels. Die Schwenkbewegung des Deckels kann bezüglich der Schwenkbewegung des Betätigungshebels aber auch kleiner oder grösser sein.

Vorzugsweise ist der Betätigungshebel von der Endlage weiter in eine Arretierlage bewegbar, in welcher ein in Stecköffnung ragender Stecker zum Gehäuse arretierbar ist, wobei vorzugsweise in der Arretierlage der Betätigungshebel vom Deckel entkoppelt ist. Die Arretierlage liegt vorzugsweise zwischen der Ausgangslage und der Endlage. Mit anderen Worten heisst dies, dass die Bewegung in die Arretierlage ausgehend von der Endlage in Richtung der Ausgangslage erfolgt.

In der Arretierlage liegt der Deckel vorzugsweise am Stecker an.

Der Deckel liegt in seiner Verschlusslage vorzugsweise an einem Anschlagsabschnitt an der Führungsbahn an. Über den Anschlagsabschnitt wird der Deckel in seiner Verschlusslage gehalten bzw. arretiert. Alternativ oder zusätzlich kann der Deckel vorzugsweise mit einer Feder, insbesondere einer Torsionsfeder, in seiner Verschlusslage gehalten werden. Die Feder wird bei der Bewegung des Deckels in die Freigabelage gespannt und stellt eine Rückstellkraft auf den Deckel bereit. Sobald der Deckel nicht mehr mit der Führungsbahn im Betätigungshebel zusammenarbeitet wird der Deckel von der Freigabelage oder einer andere beliebigen Lage in die Verschlusslage bewegt, sofern keine anderes Element, wie beispielsweise ein in die Stecköffnung einragender Stecker, die Bewegung des Deckels stört bzw. blockiert.

Vorzugsweise sind die besagten Führungsbahnen an der Innenseite des mindestens einen Betätigungshebels angeordnet. Die Führungsbahnen arbeiten vorzugsweise mit dem Deckel und/oder mit einem in den Aufnahmeraum einragenden Stecker zusammen.

Für die Zusammenarbeit mit den Führungsbahnen umfasst der Deckel mindestens ein, vorzugsweise zwei, Zapfen, wobei die Zapfen mit einem ersten Abschnitt der Führungsbahn zusammenarbeite, welcher erste Abschnitt derart ausgebildet ist, dass dieser den Deckel in seiner Verschlusslage sichert und dass dieser den Deckel während der Bewegung von der Verschlusslage in die Freigabelage von der Stecköffnung abhebt. Der erste Abschnitt der Führungsbahnen weist hierfür eine Kurvenbahn mit zunehmendem Radius bezüglich der Hebelschwenkachse gesehen auf. Der Radius der Kurvenbahn vergrössert sich also, was in der Schwenkbewegung des Deckels resultiert.

Vorzugsweise führt die Kurvenbahn des ersten Abschnittes den Deckel nur einseitig. Der Deckel kann also von der Kurvenbahn abgehoben werden.

Vorzugsweise umfasst das Gehäuse mindestens ein am Gehäuse angeformter Anschlag umfasst, welcher mit einem am Betätigungshebel angeformten Anschlagselement zusammenarbeitet. Der Anschlag und das Anschlagselement sind dabei so relativ zueinander angeordnet, dass ein Kontakt zwischen Anschlag und Anschlagselement bereitgestellt wird, bevor die Zapfen an der Führungsbahn anschlagen. Hierdurch kann eine mechanische Belastung, insbesondere ein Schlag, auf die Zapfen verhindert werden.

Besonders bevorzugt umfasst die Führungsbahn weiterhin einen zweiten Abschnitt, welcher mit dem Stecker zusammenarbeitet, wobei der zweite Abschnitt unabhängig vom ersten Abschnitt ausgebildet ist. Besonders bevorzugt weisen der erste und der zweite Abschnitt unterschiedliche Tiefen auf, wodurch diese voneinander unabhängig sind.

Besonders bevorzugt umfasst der Deckel eine Dichtung, welche mit einem die Stecköffnung umlaufenden Dichtsitz zusammenarbeitet. Hierdurch kann der Aufnahmeraum, wenn sich der Deckel in der Schlusslage befindet, nach aussen dicht abgeschlossen werden.

Vorzugsweise ist der Aufnahmeraum gegenüber der Stecköffnung mit einer Rückwand abgeschlossen und ist im Wesentlichen als Hohlraum ohne das Vorhandensein von zusätzlichen im Hohlraum liegenden Elementen bereitgestellt. Die Aufnahmevorrichtung dient dann im Wesentlichen als Parkstation für den Stecker.

In einer alternativen Ausführungsform kann der Aufnahmeraum auch mit mindestens einer weiteren Öffnung ausgebildet sein, wobei im Aufnahmeraum elektrisch leitende Elemente vorhanden sind, welche mit dem Stecker elektrisch leitend in Verbindung bringbar sind und wobei durch die weitere Öffnung ein Kabel aus dem Aufnahmeraum heraus führbar ist. In diesem Fall dient die Aufnahmevorrichtung im Wesentlichen als Steckerelement. Auch können fluidische Elemente im Aufnahmeraum angeordnet sein.

Eine Anordnung umfasst eine Aufnahmevorrichtung nach obiger Beschreibung und einen Stecker mit einem Steckergehäuse, welches durch die Stecköffnung in den Aufnahmeraum einragt. Das Steckergehäuse weist dabei mindestens in dem Bereich, welcher in den Aufnahmeraum einragt, eine zur Stecköffnung komplementäre bzw. passende Gestalt auf.

Vorzugsweise umfasst der Stecker mindestens ein, vorzugsweise zwei, Zapfen, wobei der/die Zapfen mit dem zweiten Abschnitt der Führungsbahn zusammenarbeitet. Über diesen Zapfen und den zweiten Abschnitt kann der Stecker in der Stecköffnung arretiert werden, wobei der Betätigungshebel dann in die Arretierlage bewegt werden muss.

Besonders bevorzugt weist der Stecker mindestens eine Deckelaufnahme auf, welche eine Kontaktfläche aufweist, die im Wesentlichen die gleiche Form die die Dichtung aufweist, wobei der Deckel an der Kontaktfläche anliegt, insbesondere wenn der Betätigungshebel in seiner Arretierlage ist.

Besonders bevorzugt umfasst der Stecker mindestens ein am Steckergehäuse angeformter Anschlag, welcher mit einem am Betätigungshebel angeformten Anschlagselement zusammenarbeitet. Der Anschlag und das Anschlagselement sind dabei so relativ zueinander angeordnet, dass ein Kontakt zwischen Anschlag und Anschlagselement bereitgestellt wird, bevor die Zapfen des Steckers an der Führungsbahn anschlagen. Hierdurch kann eine mechanische Belastung, insbesondere ein Schlag, auf die Zapfen verhindert werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer Ausführungsform einer Aufnahmevorrichtung für einen Stecker im geschlossenen Zustand;
- Fig. 2: eine weitere perspektivische Ansicht der Aufnahmevorrichtung nach Figur 1 ;
- Fig. 3: eine perspektivische Ansicht der Aufnahmevorrichtung nach Figur 1 mit leicht geöffnetem Deckel;
- Fig. 4: eine perspektivische Ansicht der Aufnahmevorrichtung nach Figur 1 mit geöffnetem Deckel;
- Fig. 5: eine Schnittansicht der vollständig geöffneten Aufnahme mit vorgelagertem Stecker;
- Fig. 6: eine perspektivische Schnittansicht der Figur 5;
- Fig. 7: eine perspektivische Ansicht der Aufnahmevorrichtung nach Figur 1 mit eingeführtem Stecker;
- Fig. 8a/8b/8c: Schnittansichten der Aufnahmevorrichtung mit dem Deckel in Verschlusslage und dem Betätigungshebel in Ausgangslage;
- Fig. 9a/9b: Schnittansichten der Aufnahmevorrichtung mit dem Deckel zwischen Verschlusslage und Freigabelage und dem Betätigungshebel zwischen Ausgangslage und Endlage;
- Fig. 10a/10b: Schnittansichten der Aufnahmevorrichtung mit dem Deckel in Freigabelage und dem Betätigungshebel in Endlage; und
- Fig. 11a/11b: Schnittansichten der Aufnahmevorrichtung mit dem Deckel in Kontaktlage mit dem Stecker und dem Betätigungshebel in Arretierlage.

### BESCHREIBUNG BEVORZUGTER AUSFÜHRUNGSFORMEN

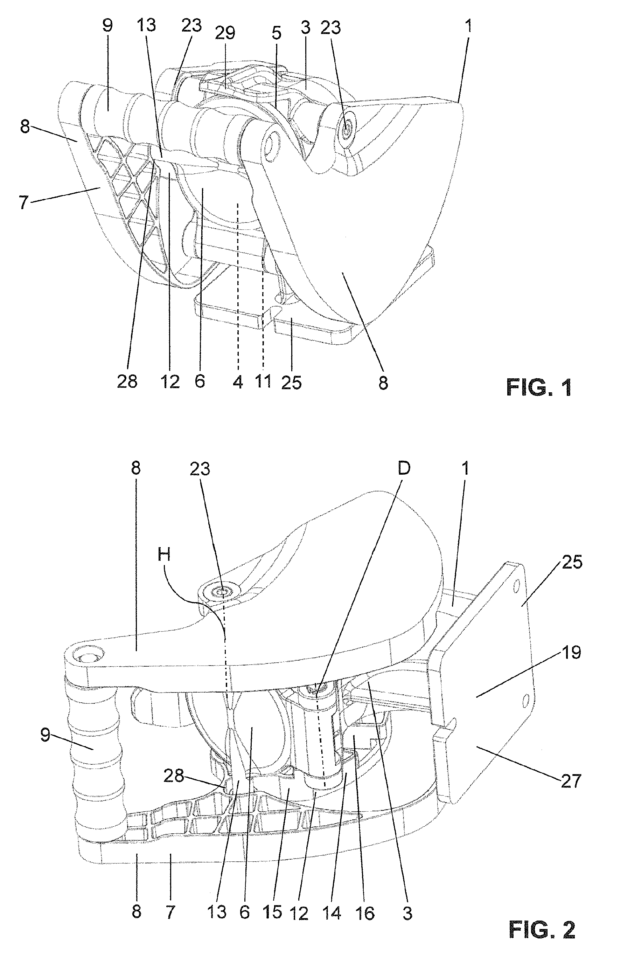

In den Figuren 1 und 2 wird eine Aufnahmevorrichtung 1 für eine Aufnahme eines Steckers 2 gezeigt. Die Aufnahmevorrichtung 1 kann beispielsweise eine Parkstation zur Aufnahme des Steckers 2 bei dessen Nichtgebrauch sein. Die Parkstation kann beispielsweise in Verkehrsmitteln, wie Zügen, dem Unterbringen eines Steckers 2 dienen.

Alternativ kann die Aufnahmevorrichtung 1 aber auch ein Teil eines elektrischen Steckverbinders sein. Die Aufnahmevorrichtung 1 dient in diesem Fall der mechanischen Aufnahme des Steckers 2 und der elektrischen Kontaktierung der elektrisch leitenden Elemente im Stecker 2.

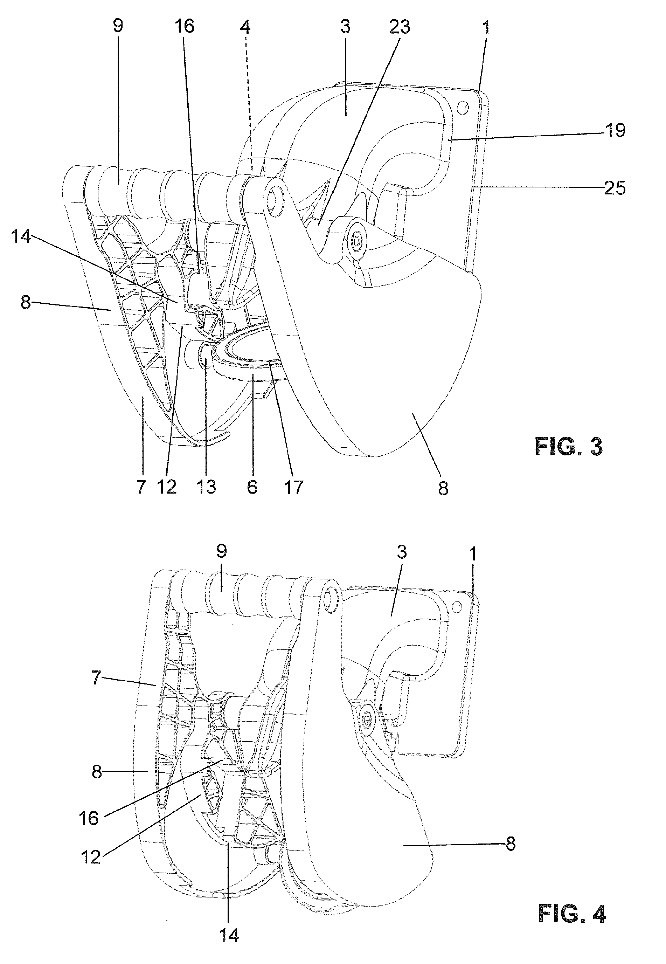

Die Aufnahmevorrichtung 1 umfasst ein Gehäuse 3 mit einem Aufnahmeraum 4, der über eine Stecköffnung 5 zugänglich ist und der Aufnahme von Teilen des Steckers 2 dient. Der Stecker 2 ragt also mindestens teilweise in die Stecköffnung 5 hinein. Weiter umfasst die Aufnahmevorrichtung 1 einen die Stecköffnung 5 verschliessenden Deckel 6, welcher um eine Deckelschwenkachse D von einer Verschlusslage in eine Freigabelage und wieder zurück verschwenkbar ist. In den Figuren 1 und 2 wird der Deckel 6 in seiner Verschlusslage gezeigt. In der Figur 3 wird der Deckel in einer Position zwischen Verschlusslage und Freigabelage gezeigt und in den Figuren 4 bis 6 wird der Deckel in seiner Freigabelage gezeigt. In der Freigabelage liegt der Deckel dabei so, dass die Steckeröffnung 5 für den Stecker 2 vollständig zugänglich ist.

Weiter umfasst die Aufnahmevorrichtung 1 einen am Gehäuse 3 angelenkten und um eine Hebelschwenkachse H verschwenkbaren Betätigungshebel 7. Der Betätigungshebel 7 weist Führungsbahnen 12 auf, in welche Teile des Deckels 6 eingreifen und über welche der Deckel 6 bei einer Verschwenkung des Betätigungshebels 7 ebenfalls verschwenkbar ist. Eine Betätigung des Betätigungshebels 7 resultiert also in einer Verschwenkung des Deckels 6, entweder von seiner Verschlusslage in Freigabelage oder aber von der Freigabelage in die Verschlusslage. Der Betätigungshebel 7 ist selbst von einer Ausgangslage, in welcher der Deckel 6 in der Verschlusslage ist, in eine Endlage, in welcher der Deckel 6 in Freigabelage ist, verschwenkbar.

Zusammenfassend umfasst die Aufnahmevorrichtung 1 ein Gehäuse 3 mit einem Aufnahmeraum 4, der über eine Stecköffnung 5 zugänglich ist, einen die Stecköffnung 5 verschliessenden Deckel 6 und einen am Gehäuse 3 angelenkten um eine Hebelschwenkachse H verschwenkbaren Betätigungshebel 7.

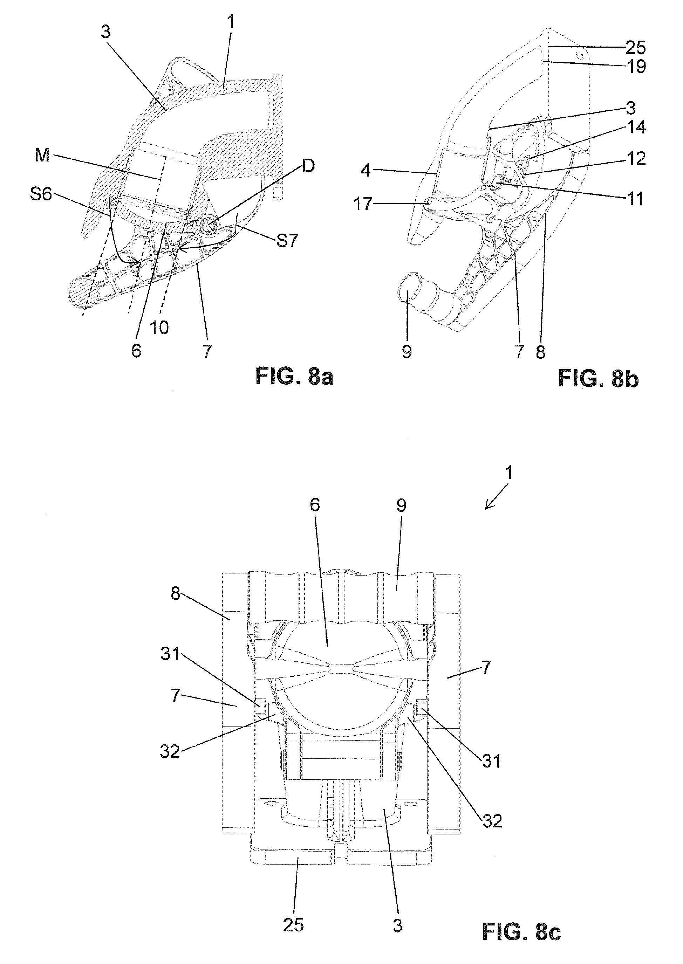

In den Figuren 8a bis 11b wird nun das Verschwenken des Deckels 6 resultierend aus einer Verschwenkung des Betätigungshebels 7 gezeigt.

In den Figuren 8a und 8b liegt der Deckel 6 in seiner Verschlusslage. Die Stecköffnung 5 ist durch den Deckel 6 verschlossen und somit nicht zugänglich. Der Betätigungshebel 7 liegt in seiner Ausgangslage. In der Figur 8b kann gut erkannt werden, dass der Deckel 6 hier über einen Zapfen 13 in der Führungsbahn 12 des Betätigungshebels 7 liegt. Über die Zusammenarbeit zwischen dem Zapfen 13 und der Führungsbahn 12 kann die Bewegung des Deckel 6 bei einem Verschwenken des Betätigungshebels 7 gesteuert werden. Bei einem Verschwenken des Betätigungshebels 7 wird in analoger Weise der Deckel 6 verschwenkt.

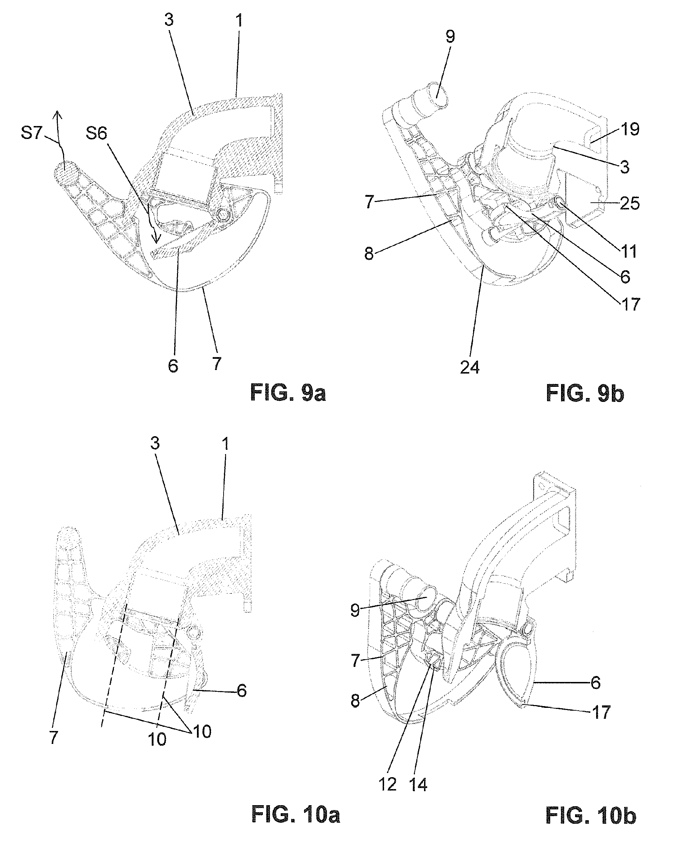

In den Figuren 9a und 9b wird der Betätigungshebel 7 zwischen seiner Ausgangslage und seiner Endlage gezeigt. Der Deckel 6 befindet sich dabei zwischen seiner Verschlusslage und seiner Freigabelage und ist in etwa zu 50% geöffnet. Von den Figuren 9a und 9b kann gut erkannt werden, dass der Betätigungshebel 7 im Uhrzeigersinn verschwekt wird, während der Deckel 6 in Gegenuhrzeigersinn verschwenkt wird. Die Schwenkbewegung des Betätigungshebels 7 trägt das Bezugszeichen S7 und die Schwenkbewegung des Deckels 6 trägt das Bezugszeichen S6. In einer allgemeinen Form kann gesagt werden, dass die Schwenkbewegung S7 des Betätigungshebels 7 und die Schwenkbewegung S6 des Deckels 6 bezüglich ihrer jeweiligen Verschwenkrichtung gegengesetzt zueinander sind. Die Verschwenkrichtung ist dabei von der Seite der Betrachtung abhängig.

In den Figuren 10a und 10b wird nun der Deckel in seiner Freigabelage gezeigt. Der Betätigungshebel 7 befindet sich in seiner Endlage. Die Stecköffnung 5 ist dabei vollständig zugänglich und ein Installateur kann einen Stecker in die Stecköffnung 5 einstecken.

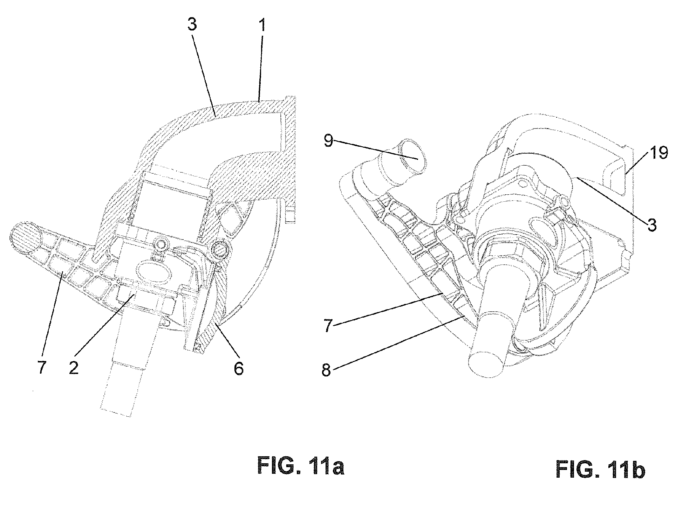

In den Figuren 11a und 11b wird die Aufnahmevorrichtung 1 mit eingestecktem Stecker 2 gezeigt. Hierbei befindet sich der Betätigungshebel 7 in Arretierlage, welcher den Stecker 2 zum Gehäuse 3 arretiert. Die Arretierlage liegt dabei zwischen der Ausgangslage und der Endlage. Um mit dem Betätigungshebel 7 die Arretierlage zu erreichen, wird dieser ausgehend von der Endlage wieder in Richtung der Ausgangslage zurück verschwenkt.

Wie in den Figuren 1 bis 4 gut erkannt werden kann, umfasst der Betätigungshebel 7 den in der vorliegenden Ausführungsform zwei Hebelarme 8, welche im Wesentlichen identisch zueinander ausgebildet sind. Die beiden Hebelarme 8 stehen mit dem Gehäuse 3 schwenkbar in Verbindung. Hierfür weist das Gehäuse 3 pro Betätigungshebel 7 ein Schwenklager 23 auf. Die Schwenklager 23 definieren die Hebelschwenkachse H. Die beiden Hebelarme 8 stehen über einen Griff 9 miteinander in Verbindung. Der Griff 9 steht dabei winklig zu den besagten Hebelarmen 8 und ist zum Gehäuse 3 hin orientiert. Über den Griff 9 kann ein Installateur den Betätigungshebel 7 betätigten und verschwenken.

Der Griff 9 ist dabei derart angeordnet, dass dieser bei einer Betätigung des Betätigungshebels 7 die Mittelachse M der Stecköffnung 5 vorzugsweise nicht schneidet. Der Griff 9 wird also nicht durch die Mittelachse M hindurchgeführt. Dies wird in den Figuren 8a bis 11b gut gezeigt. In einer besonders bevorzugten Ausführungsform ist der Betätigungshebel 7 derart angeordnet, dass dieser ein sich mit der Ausdehnung der Stecköffnung 5 um die Mittelachse M der Stecköffnung 5 erstreckender Hüllzylinder 10 nicht schneidet, sondern im Wesentlichen von diesem wegbewegt wird. Der Hüllzylinder 10 ist in der Figur 8a gestrichelt dargestellt.

Bezüglich der relativen Bewegung zwischen Betätigungshebel 7 und Deckel 6 kann unter Bezugnahme auf den Figuren 8a, 9a, 10a und 11a gesagt werden, dass sich die Bewegungskurven der Schwenkbewegung S6 und der Schwenkbewegungen S7 in einer Ebene, welche rechtwinklig zur Hebelschwenkachse H und/oder zur Deckelschwenkachse D steht, schneiden. In den genannten Figuren ist die Ebene die Zeichnungsblattebene.

Die Hebelschwenkachse H liegt beabstandet und parallel zur Deckelschwenkachse D. Besonders bevorzugt liegt die Hebelschwenkachse H bezüglich des Aufnahmeraums 4 gesehen gegenüber der Deckelschwenkachse D. Mit anderen Worten gesagt, sind die Hebelschwenkachse H und die Deckelschwenkachse D an jeweils gegenüberliegenden Seiten am Gehäuse 3 angeordnet.

Von ihrer Ausgangslage in ihre Endlage schliesst die Schwenkbewegung S7 des Betätigungshebels 7 einen Winkel vom 90° bis 130° ein. Besonders bevorzugt ist ein Winkelbereich zwischen 95° und 120°. Der Schwenkwinkel des Deckels 6 ist dabei dem Schwenkwinkel des Betätigungshebels 7 entsprechend oder grösser oder kleiner.

Besonders bevorzugt wird der Deckel mit einem Anschlagsabschnitt 28 in seiner Verschlusslage gehalten. Der Anschlagsabschnitt 28 ist dabei ein Teil der Führungsbahn 12, insbesondere Teil eines ersten Abschnittes 14. In den geschnittenen Ansichten kann ebenfalls erkannt werden, dass der Deckel 6 mit einer Feder, insbesondere mit einer Torsionsfeder 11 in Kontakt ist, welche Feder eine Kraft auf den Deckel in Richtung seiner Verschlusslage bereitstellt. Die Feder dient dabei als Rückstellfeder und stellt den Deckel 6 in die Verschlusslage zurück, sobald die Führungsbahn 12 des Betätigungshebels 7 entsprechend positioniert ist.

Für die Zusammenarbeit mit der Führungsbahn 12 weist der Deckel 6 mindestens einen, vorzugsweise zwei Zapfen 13 auf. Die Zapfen 13 arbeiten dabei mit einem ersten Abschnitt 14 der Führungsbahn 12 zusammen. Der erste Abschnitt 14 ist dabei derart ausgebildet, dass dieser den Deckel 6 in seiner Verschlusslage sichert und bei einer Verschwenkbewegung von der Verschlusslage in die Freigabelage den Deckel 6 von der Stecköffnung 5 abhebt. Der erste Abschnitt 14 weist einen Anschlagsabschnitt 28, welcher den Deckel 6 in seiner Verschlusslage hält. Der erste Abschnitt 14 der Führungsbahn 12 weist hierfür eine Kurvenbahn 15 auf. Die Kurvenbahn 15 weist bezüglich der Hebelschwenkachse H gesehen einen zunehmenden Radius auf. Der Radius der Kurvenbahn 15 nimmt mit zunehmendem Winkel vom Beginn der Kurvenbahn bis zum Ende der Kurvenbahn, vorzugsweise stetig, zu.

Die Kurvenbahn 15 des ersten Abschnittes 14 führt den Deckel nur einseitig. Dies kann in den Figuren 9a und 9b gut erkannt werden. Die Kurvenbahn 15 stützt den Deckel über den Zapfen 13, sodass dieser nicht wieder in die Verschlusslage zurückkehren kann. Mit anderen Worten gesagt, stellt die Kurvenbahn 15 einen Anschlag für den Deckel 6 bereit, wobei die Federkraft der Feder 11 gegen den Anschlag wirkt. Der Deckel 6 kann aber aufgrund der Ausbildung der Kurvenbahn 15 beispielsweise von Hand weiter angehoben werden. Hierfür weist die Kurvenbahn gegenüber der eigentlichen Kurve einen entsprechenden Ausschnitt 24 auf. Der Ausschnitt 24 ist in der Figur 9b gut dargestellt.

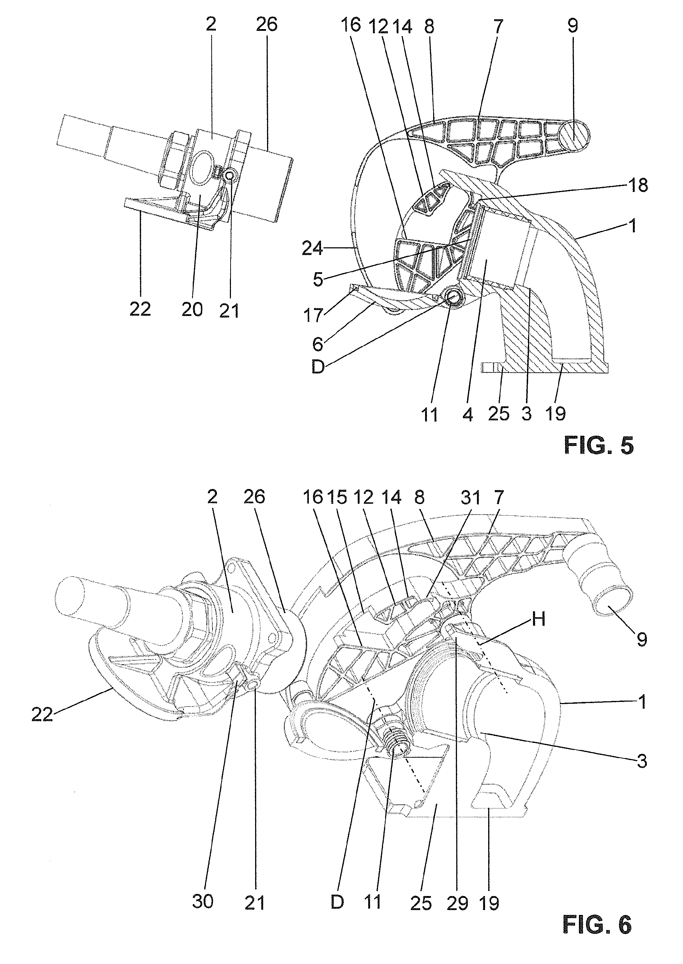

Die Führungsbahn 12 weist weiterhin einen zweiten Abschnitt 16 auf, welcher mit dem Stecker 2 zusammenarbeitet. Der zweite Abschnitt 16 ist dabei unabhängig vom ersten Abschnitt 14 ausgebildet. Diese unabhängige Ausbildung kann in der Figur 6 gut erkannt werden. Der erste Abschnitt 14 der Führungsbahn 12 ragt dabei tiefer in den Hebelarm 8 ein, als der zweite Abschnitt 16 der Führungsbahn 12. Mit den zweiten Abschnitt 16 kann ein an Steckergehäuse 20 des Steckers 2 angeordneter Zapfen 21 ergriffen werden. Über eine Verschwenkung des Betätigungshebels 7 in die Arretierlage arbeitet der Zapfen 21 mit dem zweiten Abschnitt 16 der Führungsbahn 12 zusammen und wird in der Stecköffnung 5 entsprechend arretiert. Die Arretierung wird in der Figur 11b gezeigt. Bezüglich der Arretierlage ist zu sagen, dass der Betätigungshebel 7 von seiner Endlage in Richtung der Ausgangslage zurück verschwenkt wird und seine Arretierlage dann erreicht, wenn die Zapfen 21 des Steckers 2 mit dem zweiten Abschnitt 16 zusammen arbeiten.

In der Figur 8c wird Aufnahmevorrichtung in einer weiteren Ansicht gezeigt. In dieser Ansicht kann gut erkannt werden, dass das Gehäuse 3 mindestens ein, hier zwei, Anschläge 32 umfasst. Diese stehen seitlich vom Gehäuse 3und sind Teil des Gehäuse 3. In der Verschlusslage steht der Anschlag 32 des Gehäuse 3mit einem am Betätigungshebel 7 angeformten Anschlagselement 31 in Kontakt. Über diesen Kontakt wird der Weg des Betätigungshebels 7 limitiert, wodruch beispielsweise verhindert werden kann, dass die Zapfen 13 des Deckels 6 durch eine weitergehende Bewegung desselben in ungünstigen Kontakt mit der Führungsbahn kommen. In der gezeigten Ausführungsform weist jeder der Betätigungshebel 7 jeweils ein Anschlagselement 31 auf, welches jeweils gegen den anderen Betätigungshebel 7 gerichtet ist und welches vom Betätigungshebel 7 absteht.

Weiter kann in der Figur 6 ein Codierungselement 29 erkannt werden, welches vom Aufnahmeraum wegsteht und mit dem Stecker zusammenarbeitet, so dass dieser lagerichtig in den Aufnahmeraum eingeschoben werden kann.

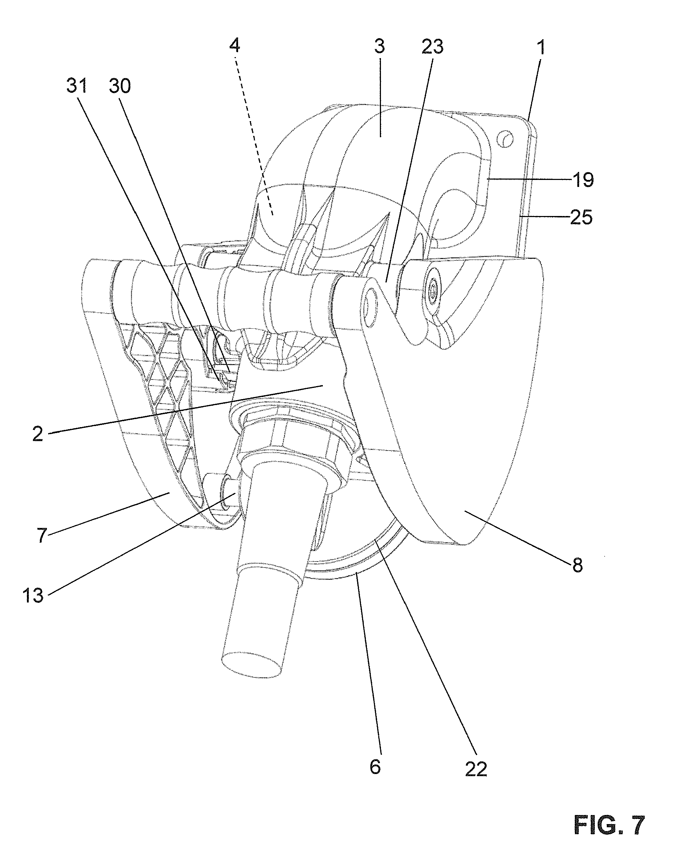

In der Figur 7 kann zudem erkannt werden, dass der Stecker 2 mindestens einen Anschlag 30 aufweist, welcher mit einem am Betätigungshebel 7 angeordneten Anschlagselement 31 in Kontakt steht, wenn der Stecker 2 in die Stecköffnung 5 einragt. Durch den Kontakt zwischen Anschlag 30 und Anschlagselement 31 wird verhindert, dass es zu einem ungünstigen Kontakt zwischen der Führungsbahn 12 und dem Zapfen 21 des Steckers 2 kommt.

Weiter weist der Deckel 6 eine Dichtung 17 auf, welche mit einem die Stecköffnung 5 umlaufenden Dichtsitz 18 zusammen arbeitet. In der Verschlusslage verschliesst die Dichtung 17 dem Aufnahmeraum bezüglich Fluiden und festen Verschmutzungen.

In der Schnittdarstellung kann gut erkannt werden, dass der Aufnahmeraum 4 gegenüber der Stecköffung 5 mit einer Rückwand 19 abgeschlossen ist. Der Aufnahmeraum 4 hat also im Wesentlichen die Gestalt eines Hohlraumes, welcher ausschliesslich durch die Stecköffnung 5 zugänglich ist. Der Hohlraum ist im Wesentlichen leer.

Im Bereich der Rückwand 19 weist die Aufnahmevorrichtung 1 bzw. das Gehäuse 2 hier einen Flansch 25 auf, über welchen die Aufnahmevorrichtung 1 an eine weitere Apparatur befestigt werden kann. Die weitere Apparatur ist beispielsweise ein Fahrzeug, wie ein Zug. Der Flansch 25 weist eine Befestigungsfläche 27 auf, über welche der Flansch 25 mit der weiteren Apparatur verbindbar ist. Die Mittelachse M der Stecköffnung 5 ist in dem Bereich, in den der Stecker 2 einragt, winklig zur Befestigungsfläche 27 ausgebildet.

Der Stecker 2, welcher in den Figuren 5, 6, 7 sowie 11a und 11b gezeigt wird, weist vorzugsweise ein Steckergehäuse 20 auf. Das Steckergehäuse 20 dient dabei der Aufnahme zum Beispiel von elektrischen leitenden Elementen, wie Buchsenelemente bzw. Stiftelemente und Kabel, welche mit den Buchsenelementen bzw. den Stiftelementen in elektrischem Kontakt stehen. Aussenseitig im Frontbereich weist das Steckergehäuse 20 einen Führungsabschnitt 26 auf, welcher in die Stecköffnung 5 einragt. Der Führungsabschnitt 26 weist dabei die gleiche Aussenform auf wie die Stecköffnung 5.

Der Stecker 2 weist, wie in den Figuren 11a und 11b gut zu erkennen ist, eine Deckelaufnahme 22 auf. Die Deckelaufnahme 22 umfasst dabei eine Kontaktfläche 23, die im Wesentlichen die gleiche Form wie die Dichtung 17 aufweist. Der Deckel 6 liegt dabei an der Kontaktfläche 23 an, wenn der Betätigungshebel 7 in seiner Arretierlage ist. Hierbei wir die Dichtung 17 von allfälligen Verschmutzungen geschützt. Der Deckel 6 wird vorzugsweise ausschliesslich über seine Federkraft der Torsionsfeder 11 an der Deckelaufnahme 22 angedrückt. Die Deckelaufnahme 22 liegt derart beabstandet zur Mittelachse M des Steckers 2, dass der Deckel 6 flächig auf der Deckelaufnahme 22 liegt. Die Deckelaufnahme 22 liegt vorzugsweise in gleicher Orientierung wie die Mittelachse des Steckers 2.

**BEZUGSZEICHENLISTE**

| | | | |
|---|---|---|---|
| 1 | Aufnahmevorrichtung | 30 | Anschlag Stecker |
| 2 | Stecker | 31 | Anschlagselement |
| 3 | Gehäuse | 32 | Anschlag Gehäuse |
| 4 | Aufnahmeraum | | |
| 5 | Stecköffnung | S6 | Schwenkbewegung Deckel |
| 6 | Deckel | S7 | Schwenkbewegung Betätigungshebel |
| 7 | Betätigungshebel | | |
| 8 | Hebelarm | M | Mittelachse |
| 9 | Griff | D | Deckelschwenkachse |
| 10 | Hüllzylinder | H | Hebelschwenkachse |
| 11 | Torsionsfeder | | |
| 12 | Führungsbahn | | |
| 13 | Zapfen | | |
| 14 | erster Abschnitt | | |
| 15 | Kurve | | |
| 16 | zweiter Abschnitt | | |
| 17 | Dichtung | | |
| 18 | Dichtsitz | | |
| 19 | Rückwand | | |
| 20 | Steckergehäuse | | |
| 21 | Zapfen | | |
| 22 | Deckelaufnahme | | |
| 23 | Schwenklager | | |
| 24 | Ausschnitt | | |
| 25 | Flansch | | |
| 26 | Führungsabschnitt | | |
| 27 | Befestigungsfläche | | |
| 28 | Anschlagsabschnitt | | |
| 29 | Codierungselement | | |

## Patentansprüche

1. Aufnahmevorrichtung (1) für eine Aufnahme eines Steckers (2) umfassend
ein Gehäuse (3) mit einem Aufnahmeraum (4), der über eine Stecköffnung (5) zugänglich ist und der Aufnahme von Teilen des Steckers (2) dient,
einen die Stecköffnung (5) verschliessenden Deckel (6), welcher um eine Deckelschwenkachse (D) von einer Verschlusslage in eine Freigabelage verschwenkbar ist, und
einen am Gehäuse angelenkten um eine Hebelschwenkachse (H) verschwenkbaren Betätigungshebel (7) mit Führungsbahnen (12), in welche Teile des Deckels (6) eingreifen und über welche der Deckel (6) bei einer Verschwenkung des Betätigungshebels (7) verschwenkbar ist,
wobei der Betätigungshebel (7) von einer Ausgangslage, in welcher der Deckel (6) in der Verschlusslage ist, in eine Endlage, in welcher der Deckel (6) in Freigabelage ist, verschwenkbar ist,
**dadurch gekennzeichnet,**
**dass** die Schwenkbewegung (S7) des Betätigungshebels (7) und die Schwenkbewegung (S6) des Deckels (6) bezüglich ihrer jeweiligen Verschwenkrichtung entgegengesetzt zueinander sind.

2. Aufnahmevorrichtung nach Anspruch 1, **dadurch gekennzeichnet, dass** der Betätigungshebel (7) über mindestens ein, vorzugsweise zwei Hebelarme (8), welche um die Hebelschwenkachse (H) verschwenkbar mit dem Gehäuse (3) in Verbindung stehen, und einen mit dem einen bzw. mit den mindestens zwei Hebelarmen (8) in Verbindung stehenden Griff (9) aufweist, welcher winklig zum besagten Hebelarm (8) zum Gehäuse (3) hin orientiert ist.

3. Aufnahmevorrichtung nach Anspruch 2, **dadurch gekennzeichnet, dass** der Griff (9) bei der Bewegung des Betätigungshebels (7), insbesondere vor der Ausgangslage in die Endlage, die Mittelachse (M) der Stecköffnung (5) oder ein sich um die Mittelachse mit der Ausdehnung der Stecköffnung (5) erstreckender Hüllzylinder (10) nicht schneidet, sondern im Wesentlichen von dieser/diesem weg bewegt wird.

4. Aufnahmevorrichtung nach einem der vorhergehenden Ansprüche, **dadurch gekennzeichnet, dass** in einer Ebene rechtwinklig zur Hebelschwenkachse (H) und/oder zur Deckelschwenkachse (D) gesehen, sich die Bewegungskurven in dieser Ebene der Schwenkbewegung (S6) des Deckels (6) und der Schwenkbewegung (S7) des Betätigungshebels (7) schneiden.

5. Aufnahmevorrichtung nach einem der vorhergehenden Ansprüche, **dadurch gekennzeichnet, dass** die Hebelschwenkachse (H) beabstandet und parallel zur Deckelschwenkachse (D) liegt, wobei vorzugsweise die Hebelschwenkachse (H) bezüglich des Aufnahmeraums gegenüber der Deckelschwenkachse (D) liegt.

6. Aufnahmevorrichtung nach einem der vorhergehenden Ansprüche, **dadurch gekennzeichnet, dass** die Schwenkbewegung (S7) des Betätigungshebels (7) von der Ausgangslage, in welcher der Deckel (6) in Verschlusslage ist, bis in seine Endlage, in welcher der Deckel (6) in Freigabelage ist, einen Winkel von 90° bis 130°, insbesondere von 95° bis 120° einschliesst.

7. Aufnahmevorrichtung nach einem der vorhergehenden Ansprüche, **dadurch gekennzeichnet, dass** die Schwenkbewegung (S6) des Deckels (6) bezüglich des Schwenkwinkels der Schwenkbewegung (S7) des Betätigungshebels (7) entspricht oder grösser oder kleiner ist.

8. Aufnahmevorrichtung nach einem der vorhergehenden Ansprüche, **dadurch gekennzeichnet, dass** der Betätigungshebel (7) von der Endlage weiter in eine Arretierlage bewegbar ist, in welcher ein in Stecköffnung (5) ragender Stecker (2) zum Gehäuse (3) arretierbar ist, wobei vorzugsweise in der Arretierlage der Betätigungshebel (7) vom Deckel (6) entkoppelt ist.

9. Aufnahmevorrichtung nach einem der vorhergehenden Ansprüche, **dadurch gekennzeichnet, dass** der Deckel (6) mit einem Anschlagsabschnitt (28) der Führungsbahn und/oder mit einer Feder, insbesondere einer Torsionsfeder (11) in seiner Verschlusslage gehalten wird.

10. Aufnahmevorrichtung nach einem der vorhergehenden Ansprüche, **dadurch gekennzeichnet, dass** die Führungsbahn (12) an der Innenseite der bzw. die Betätigungshebel (7) angeordnet ist.

11. Aufnahmevorrichtung nach Anspruch 10, **dadurch gekennzeichnet, dass** der Deckel (6) mindestens ein, vorzugsweise zwei, Zapfen (13) umfasst, wobei die Zapfen (13) mit einem ersten Abschnitt (14) der Führungsbahn (12) zusammenarbeitet, welcher erste Abschnitt (14) derart ausgebildet ist, dass diese den Deckel (6) in seiner Verschlusslage sichert und dass diese den Deckel (6) während der Bewegung von der Verschlusslage in die Freigabelage von der Stecköffnung (5) abhebt, wobei der erste Abschnitt (14) der Führungsbahnen (12) hierfür eine Kurvenbahn (15) mit zunehmendem Radius bezüglich der Hebelschwenkachse (H) gesehen aufweist.

12. Aufnahmevorrichtung nach einem der Ansprüche 7 bis 9, **dadurch gekennzeichnet, dass** die Führungsbahn (12) weiterhin einen zweiten Abschnitt (16) umfasst, welcher mit dem Stecker (2) zusammenarbeitet, wobei der zweite Abschnitt (16) unabhängig vom ersten Abschnitt (14) ausgebildet ist.

13. Aufnahmevorrichtung nach einem der vorhergehenden Ansprüche, **dadurch gekennzeichnet, dass** der Deckel (6) eine Dichtung (17) umfasst, welche mit einem die Stecköffnung (5) umlaufenden Dichtsitz (18) zusammenarbeitet.

14. Aufnahmevorrichtung nach einem der vorhergehenden Ansprüche, **dadurch gekennzeichnet, dass** die der Aufnahmeraum (4) gegenüber der Stecköffnung (5) mit einer Rückwand (19) abgeschlossen ist und im Wesentlichen als Hohlraum ohne das Vorhandensein von zusätzlichen im Hohlraum liegenden Elementen bereitgestellt ist.

15. Aufnahmevorrichtung nach einem der vorhergehenden Ansprüche, **dadurch gekennzeichnet, dass** das Gehäuse (3) mindestens ein am Gehäuse (3) angeformter Anschlag (32) umfasst, welcher mit einem am Betätigungshebel (6) angeformten Anschlagselement (31) zusammenarbeitet, und/oder dass im Bereich der Stecköffnung (5) ein Codierungselement (29) zur Zusammenarbeit mit dem Stecker (2) angeordnet ist.

16. Anordnung umfassend eine Aufnahmevorrichtung (1) nach einem der vorhergehenden Ansprüche und einen Stecker (2) mit einem Steckergehäuse (20), welches durch die Stecköffnung (5) in den Aufnahmeraum (4) einragt.

17. Anordnung nach Anspruch 16, **dadurch gekennzeichnet, dass** der Stecker (2) mindestens ein, vorzugsweise zwei, Zapfen (21) umfasst, wobei die Zapfen (21) mit dem zweiten Abschnitt (16) der Führungsbahn (12) zusammenarbeitet.

18. Anordnung nach einem der Ansprüche 16 oder 17, **dadurch gekennzeichnet, dass** der Stecker (2) eine Deckelaufnahme (22) aufweist, welche eine Kontaktfläche (23) aufweist, die im Wesentlichen die gleiche Form wie die Dichtung (17) aufweist, wobei der Deckel (6) an der Kontaktfläche (23) anliegt, insbesondere wenn der Betätigungshebel (7) in seiner Arretierlage ist.

19. Anordnung nach einem der Ansprüche 16 bis 18, **dadurch gekennzeichnet, dass** der Stecker (2) mindestens ein am Steckergehäuse (20) angeformter Anschlag (30) umfasst, welcher mit einem am Betätigungshebel (6) angeformten Anschlagselement (31) zusammenarbeitet.
